(19) Europäisches Patentamt
European Patent Office
Office européen des brevets

(11) **EP 2 357 768 B1**

(12) **EUROPEAN PATENT SPECIFICATION**

(45) Date of publication and mention
of the grant of the patent:
**03.07.2013 Bulletin 2013/27**

(21) Application number: **11001152.5**

(22) Date of filing: **11.02.2011**

(51) Int Cl.:
**H04L 25/03** (2006.01)     **H04B 7/06** (2006.01)

(54) **Multiple-input multiple-output systems and methods for wireless communication thereof for reducing the quantization effect of precoding operations utilizing a finite codebook**

MIMO-Systeme und Verfahren für drahtlose Kommunikation damit zur Verringerung des Quantisierungseffekts von Vorkodierungsvorgängen unter Verwendung eines endlichen Kodebuches

Systèmes à entrées et sorties multiples et procédé pour leur communication sans fil pour réduire l'effet de quantification des opérations de précodage au moyen d'un guide de codification fini

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2010 US 303680 P**
**10.02.2011 US 201113024762**

(43) Date of publication of application:
**17.08.2011 Bulletin 2011/33**

(73) Proprietor: **HTC Corporation**
**Taoyuan County 330 (TW)**

(72) Inventors:
• **Jen, Yu-Chih**
**Taoyuan City**
**Taoyuan County 330 (TW)**
• **Yeh, Ping-Cheng**
**Taoyuan City**
**Taoyuan County 330 (TW)**
• **Meng, Ling-San**
**Taoyuan City**
**Taoyuan County 330 (TW)**
• **Lan, Pang-Chang**
**Taoyuan City**
**Taoyuan County 330 (TW)**
• **Wu, Chih-Yao**
**Taoyuan City**
**Taoyuan County 330 (TW)**

(74) Representative: **Klang, Alexander H. et al**
**Wagner & Geyer**
**Gewürzmühlstrasse 5**
**80538 München (DE)**

(56) References cited:
**WO-A1-2009/132601     WO-A1-2010/125237**
**US-A1- 2008 212 461**

• **HEATH R W JR ET AL: "Limited Feedback Unitary Precoding for Spatial Multiplexing Systems", IEEE TRANSACTIONS ON INFORMATION THEORY, IEEE PRESS, USA, vol. 51, no. 8, 1 August 2005 (2005-08-01) , pages 2967-2976, XP011136349, ISSN: 0018-9448, DOI: DOI: 10.1109/TIT.2005.850152**

## Description

## BACKGROUND OF THE INVENTION

### Field of the Invention

The invention generally relates to wireless communication systems and methods thereof, and more particularly, to methods for wireless communication for reducing the quantization effect of precoding operations utilizing a finite codebook in multiple-input multiple-output (MIMO) or multiple-input single-output (MISO) systems from a transmitter to a receiver.

### Description of the Related Art

In wireless communications, multiple-input and multiple-output (MIMO) technology involves the use of multiple antennas at both the transmitter and receiver sides to improve communication performance. MIMO technology offers significant increases in data throughput and link ranges without additional bandwidth or transmit power via higher spectral efficiency and link reliability or diversity. One of the common functions in MIMO technology is precoding, which is a signal processing technique for MIMO communications to exploit the knowledge of the information of the downlink channel quality at the transmitter side. With precoding, the transmitter can transform signals using appropriate precoding matrices and perform power allocation adaptively according to the variation of link quality. It has been shown that precoding can substantially improve the spectral efficiency for MIMO communications.

Precoding is an effective technique improving the performance of MIMO-OFDM systems. In practical systems, the precoding matrices are predetermined and only the index of the selected matrix is fed back.

Depending on the adopted criteria for assessing link performance, different objective functions exist for the computation of the optimal precoding matrix. For example, the minimum square error (MSE) and the achieved link capacity are two commonly adopted performance measures.

For the operation of precoding in MIMO communication systems, the information of the downlink channel quality generally has to be fed back from the receiver to the transmitter side. In general, precoding may require knowledge of channel state information (CSI) at the transmitter side. To achieve the optimal performance, the full information of the downlink channel quality or the optimal precoding matrix computed by the receiver has to be fed back to the transmitter side. Such signaling process incurs considerable overhead which scales with the number of antennas, i.e., the MIMO mode, and is undesirable in most cases. In current MIMO systems, the approach of codebook-based precoding is adopted to reduce the feedback overhead. In codebook-based precoding, a number of selected precoding matrices are known to both the transmitter side and receiver side prior to the transmissions. The receiver simply feeds back the index of the most preferred precoding matrix which yields the best performance based on the measured link quality and the objective function to the transmitter via the feedback channel. For example, if the number of precoding matrices is set to $2^n$, the length of the feedback can be n bits. Codebook-based precoding can substantially reduce the feedback overhead.

Ideally, the size of the codebook should be made as small as possible to reduce receiver complexity and the feedback overhead. However, the link performance is degraded with a small codebook size as the quantization error for the optimal precoding matrix increases in this case. Precoding gain in MIMO systems can be increased by increasing the size of the codebook. However, at the same time the complexity of codeword selection and memory requirements increase exponentially with the number of bits. A tradeoff thus exists when designing the precoder codebook.

WO 2010/125237 A1 forms part of the prior art under Art. 54 (3) EPC and discloses that a state of a wireless channel on which information is received is measured; the measured state is used to select from a codebook a plurality of N codewords which optimize a predefined measure, and first and second codewords of the plurality are reported which best optimizes and next-best optimizes the predefined measure. If by example the above is done by a user equipment UE, the network receives first and second indications, searches a codebook using the first and second indications to find the first and second codewords; and utilizes them to improve the channel state information, such as by interpolating between them to find an estimate of the channel. In examples the channel is a MIMO channel that is estimated at two or more antenna ports, there are interpolation weights sent with the codeword indications, and the interpolating uses a geodesic algorithm.

US 2008/0212461 A1 discloses a transform-based method for representing steering matrices in transmit beamforming for a multiple-input multiple-output orthogonal frequency division multiplexing (MIMO-OFDM) system. Beamforming embodiments generate a transform-based representation of steering matrices for at least a subset of sub-carriers for which channel information is known. In some embodiments, a beamformer is able to receive transform matrices information for at least a subset of channel sub-carriers, and generate corresponding channel sub-carrier steering matrices. Some embodiments of a beamformee are able to map at least a subset of channel sub-carrier steering matrices to corresponding transform matrices information prior to transmitting the transform matrix information to a beamformer. Other embodiments of a beamformer are able to receive channel information for at least a subset of sub-carriers of a channel, and compute a transform-based representation of a steering matrix for each sub-carrier for which channel information is known.

## BRIEF SUMMARY OF THE INVENTION

Accordingly, embodiments of the invention provide methods for wireless communication for reducing the quantization effect of precoding operations utilizing a finite codebook in multiple-input multiple-output (MIMO) or multiple-input single-output (MISO) systems from a transmitter to a receiver. In one aspect of the invention, a method for wireless communication in an multiple-input multiple-output (MIMO) system or a multiple-input single-output (MISO) system is provided as set forth in claim 1.

In another aspect of the invention, a receiver is provided as set forth in claim 5 and an MIMO or MISO system is provided which comprises a receiver and a transmitter, as set forth in claim 8.

Other aspects and features of the present invention will become apparent to those with ordinarily skill in the art upon review of the following descriptions of specific embodiments of apparatuses and methods for handling a network initiated detachment procedure.

## BRIEF DESCRIPTION OF DRAWINGS

The invention can be more fully understood by reading the subsequent detailed description and examples with references made to the accompanying drawings, wherein:

Fig. 1 is a block diagram illustrating a wireless communications system according to an embodiment of the invention;

Fig. 2 is a flow chart illustrating a method for reducing the quantization effect of precoding operations utilizing a finite codebook in MIMO or multiple-input single-output (MISO) systems from a transmitter to a receiver according to an embodiment of the invention; and

Fig. 3 is a schematic illustrating an example for determining one or more scalar coefficients in the precoding operations based on a set of indices of precoding matrices within the finite codebook and generating a refined precoding matrix based on the set of indices of precoding matrices and the one or more scalar coefficients according to another embodiment of the invention.

## DETAILED DESCRIPTION OF THE INVENTION

The following description is of the best-contemplated mode of carrying out the invention. This description is made for the purpose of illustrating the general principles of the invention and should not be taken in a limiting sense.

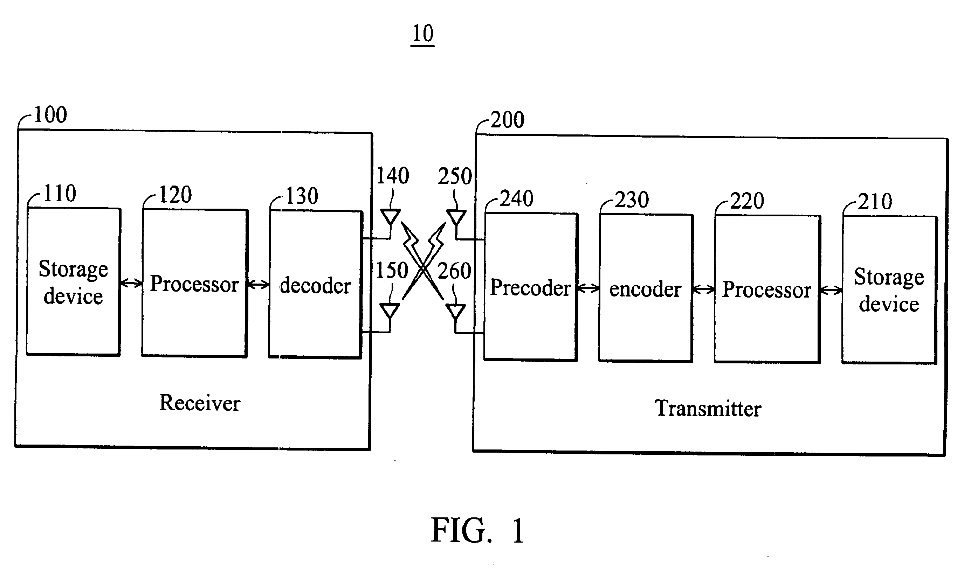

Fig. 1 is a block diagram illustrating a wireless communications system according to an embodiment of the invention. Particularly, the wireless communications system 100 is a multiple-input multiple-output (MIMO) system and comprises at least a transmitter 200 and a receiver 100. The receiver 100 is wirelessly connected to the transmitter 200 for obtaining wireless services. Generally, the transmitter 200 may be a network/base station, a user equipment (UE) or a mobile station while the receiver 100 may be a UE, a mobile station or a network/base station. For example, the receiver 100 may be a mobile station and the transmitter 200 may be its serving base station. For downlink (DL) transmission, signals are transmitted from the transmitter 200 to the receiver 100. On the transmitter side, the transmitter 200 (e.g., a base station) may comprise a storage device 210, a processor 220, a multiple-input multiple-output (MIMO) encoder 230 that encodes MIMO signals, a precoder 240 for performing precoding operations to precode the encoded signals and multiple antennas 250 and 260. On the receiver side, the receiver 100 may comprise a storage device 110, a processor 120, an MIMO decoder 130 that decodes MIMO signals and multiple antennas 140 and 150.

It is to be noted that, for the precoding operation, the information of the downlink channel quality (e.g. the channel state information (CSI)) has to be fed back from the receiver 100 to the transmitter 200 in the form of limited quantized feedback, where the quantization points may be referred to as precoding codewords or precoding matrices and the set of codewords or precoding matrices form a precoding codebook. The precoding codebook may be predefined in the storage device 210 or configurable by the transmitter 200. The precoding codebook may be broadcasted by the transmitter 200 or the receiver 100 through, for example, system information, but it is not limited thereto. The storage device 110 of the receiver 100 may also store a precoding codebook with a set of predefined codewords or precoding matrices as same as those predefined in the storage device 210.

The receiver 100 may then transmit a set of indices of precoding matrices or a set of precoding matrices and one or more scalar coefficient(s) to the transmitter 200 through data signaling or control signaling.

In some embodiments, the precoding codebook may be transmitter specific or receiver specific. In one embodiment, the transmitter 200 and/or the receiver 100 may further be configured in a specific transmission mode for applying precoding operations of the invention.

The transmitter 200 may receive the set of indices of precoding matrices and one or more scalar coefficients from the receiver 100 and generate a refined precoding matrix that is to be combined with a data signal and apply the refined precoding matrix for transmission, e.g, to precode the data signal according to the set of indices of precoding matrices and the one or more scalar coefficients. For example, in one embodiment, the transmitter 200 may obtain a set of precoding matrices from a finite codebook according to the set of indices of precoding matrices and apply a specific mathematics method with obtained precoding matrices and the one or more scalar coefficients, such as by interpolating between the obtained precoding matrices using the one or more scalar coefficients, to generate the refined precoding matrix. In some embodiments, the transmitter 200 may also generate the refined precoding matrix based on channel condition, transmission power, or other information regarding the receiver 100.

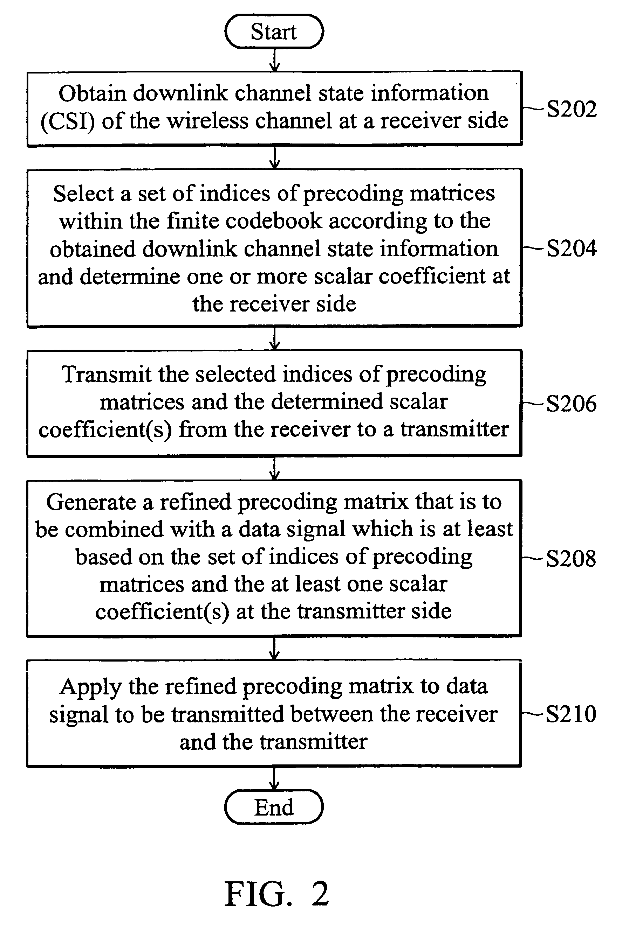

Fig. 2 is a flow chart illustrating a method for reducing the quantization effect of precoding operations utilizing a finite codebook in MIMO systems from a transmitter to a receiver according to an embodiment of the invention. The method can be applied to an MIMO wireless communication system as shown in Fig.1. In this embodiment, the receiver 100 is wirelessly connected to the transmitter 200 which initiates a precoding operation via a wireless channel. First, in step S202, the receiver 100 obtains downlink channel state information (CSI) of the wireless channel through the decoder 130. After obtaining the downlink channel state information, in step S204, the receiver 100 selects a set of indices of precoding matrices within the finite codebook according to the obtained downlink channel state information and determines the one or more scalar coefficients through the decoder 130. Note that the receiver 100 may select a number of indices of precoding matrices within the finite codebook. For example, the receiver 100 may select two indices of precoding matrices within the finite codebook which are the indices of the best and second best matrices among the precoding matrices.

After the set of indices of precoding matrices has been selected and the one or more scalar coefficients has been determined, in step S206, the receiver 100 transmits the selected indices of precoding matrices and the determined scalar coefficient(s) to the transmitter 200 through the decoder 130. Upon reception of the set of selected indices of precoding matrices and the determined scalar coefficient(s), in step S208, the transmitter 200 generates a refined precoding matrix that is to be combined with a data signal which is at least based on the set of indices of precoding matrices and the one or more scalar coefficients. After the refined precoding matrix has been generated, in step S210, the transmitter 200 applies the refined precoding matrix to data signals to be transmitted between the receiver 100 and the transmitter 200, e.g, to precode the data signals.

The one or more scalar coefficients are determined based on the set of indices of precoding matrices or the set of precoding matrices. The set of indices of precoding matrices or the set of precoding matrices form a subspace and the one or more scalar coefficient(s) may be obtained by computing the projection of the optimal precoding matrix onto the subspace spanned by the set of indices of precoding matrices or the set of precoding matrices. The distance between the precoding matrices such as the chordal distance, the projection 2-norm distance or the Fubini-Study distance may be applied to obtain the projection.

Because the refined precoding matrix is newly generated which is expected to reduce the quantization error, the refined precoding matrix introduces less quantization effect as compared with any single precoding matrix within the codebook.

The one or more scalar coefficients may be represented by a field of a fixed size in the data signaling or control signaling format. In some embodiments, there may be a field in the data signaling or control signaling format to indicate the number of indices of precoding matrices or precoding matrices for the set of indices of precoding matrices or precoding matrices. Similarly, in some embodiments, there may be a field in the data signaling or control signaling format to indicate the number of scalar coefficients. In some embodiments, the number of indices of precoding matrices or precoding matrices in the set of indices of precoding matrices or precoding matrices and the number of scalar coefficients for the scalar coefficients are predefined.

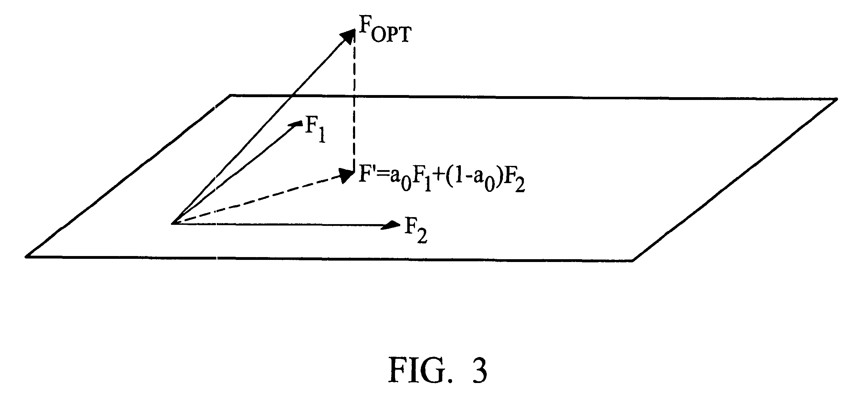

Fig. 3 is a schematic illustrating an example for determining one or more scalar coefficients in the precoding operations based on a set of indices of precoding matrices within the finite codebook and generating a refined precoding matrix based on the set of indices of precoding matrices and the one or more scalar coefficients according to another embodiment of the invention. Please refer to Fig. 3. In this embodiment, two precoding matrix indices along with one coefficient are provided to the transmitter 200 for generating a refined precoding matrix. In Fig. 3, for a particular channel realization and performance criterion, the best and the second-best precoding matrices within a given codebook can be determined and denoted by $F_1$ and $F_2$ respectively. Further, the optimal precoding matrix corresponding to the aforementioned channel realization and performance criterion is denoted by $F_{oPt}$. The optimal precoding matrix $F_{opt}$ may be determined by, for example, the minimum square error (MSE) or the achieved link capacity measurement for all of the precoding matrices within the given codebook. The coefficient, denoted by $a_0$, can be thus determined by the following formula:

$$a_0 = \text{argmin}_a \, d \, ( \, F_{opt}, \, a \, F_1 + (1\text{-}a) \, F_2 \, ) \quad \ldots\ldots\ldots\ldots\ldots\ldots\ldots (2),$$

where d() calculates the distance between two matrices and where a is a parameter ranged from 0 to 1 for determining whether the matrix distance between the precoding matrices $F_1$, $F_2$ and the optimal precoding matrix $F_{opt}$ is minimized. Based on the adopted performance criterion and the codebook design rule, different definitions of a matrix distance can be applied, e.g., the chordal, Fubini-Study or projection 2-norm distances. In one embodiment, the coefficient $a_0$ may also be obtained by computing the projection of the optimal precoding matrix $F_{opt}$ onto the subspace spanned by the set of indices of precoding matrices or the set of precoding matrices $F_1$ and $F_2$, wherein the matrix distance such as the chordal distance, the projection 2-norm distance or the Fubini-Study distance may be applied to obtain the projection.

By sending $F_1$, $F_2$, and $a_0$ to the transmitter 200, a refined precoding matrix $F'=a_0 F_1 + (1\text{-}a_0) F_2$ with less quantization effect as compared to the best precoding matrix $F_1$ within the codebook can be generated to precode data signals to be transmitted between the transmitter and the receiver.

In summary, according to the method for wireless communication in an MIMO system of the invention, the receiver is allowed to feed back multiple indices of the precoding matrices using a finite codebook along with some auxiliary information related to the geometric structure among the precoding matrices to the transmitter such that a refined precoding matrix which is expected to reduce the quantization error can be generated at the transmitter side, thus, reducing the quantization effect of precoding operations. Moreover, with the method for wireless communication in an MIMO system of the invention, the degree of freedom in generating precoding matrices and thus the quantization effect can be largely improved even with a small codebook.

Methods for wireless communication in an MIMO system and systems thereof, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope of the present invention as defined by the following claims.

**Claims**

1.   A method for wireless communication in a multiple-input multiple-output, MIMO, system or a multiple-input single-output, MISO, system, comprising:

obtaining downlink channel state information at a receiver side (S202);
selecting a set of indices of precoding matrices or a set of precoding matrices within the finite codebook according to the obtained downlink channel state information at the receiver side (S204);
transmitting the selected indices of precoding matrices and one or more scalar coefficients from the receiver (100) to a transmitter (200) (S206);
generating a refined precoding matrix based on the set of indices of precoding matrices and the one or more scalar coefficients at the transmitter side (S208); and
applying the refined precoding matrix to precode data signals to be transmitted between the transmitter (200) and the receiver (100) to reduce the quantization effect of precoding operations (S210).

**characterized by**

determining the one or more scalar coefficients based on the set of indices of precoding matrices or the set of precoding matrices at the receiver side;

wherein the one or more scalar coefficients is determined by calculating a projection of an optimal precoding matrix onto a subspace spanned by the set of indices of precoding matrices or the set of precoding matrices.

2.  The method of claim 1, wherein the projection is represented by a distance between the precoding matrices.

3.  The method of claim 1, wherein the codebook is predefined or configurable by the transmitter.

4.  The method of claim 1, wherein the number of the set of indices of precoding matrices or the set of precoding matrices scalar coefficients is predefined.

5.  A receiver (100) coupled to a transmitter (200) via a wireless channel in an multiple-input multiple-output, MIMO, or a multiple-input single-output, MISO, wireless communication system, comprising:

    a decoder (130), configured for obtaining downlink channel state information of the wireless channel, for selecting a set of indices of precoding matrices or a set of precoding matrices within a finite codebook according to the obtained downlink channel state information, and for transmitting the selected indices of precoding matrices and one or more scalar coefficients to the transmitter via the wireless channel such that the transmitter (200), upon receiving the selected indices of precoding matrices and a set of scalar coefficients, generates a refined precoding matrix based on the set of indices of precoding matrices and the one or more scalar coefficients, and applies the refined precoding matrix for transmission between the transmitter (200) and the receiver (100),

    **characterized in that** the one or more scalar coefficients are determined at the receiver based on the set of indices of precoding matrices or the set of precoding matrices; wherein the one or more scalar coefficients are determined by calculating a projection of an optimal precoding matrix onto a subspace spanned by the set of indices of precoding matrices or the set of precoding matrices.

6.  The receiver of claim 5, wherein the projection is represented by a distance between the set of precoding matrices.

7.  The receiver of claim 5, wherein the number of the set of indices of precoding matrices or the set of precoding matrices scalar coefficients is predefined.

8.  A multiple-input multiple-output, MIMO, or a multiple-input single-output, MISO, system, comprising:

    a receiver (100) as set forth in any of claims 5-7; and
    a transmitter (200) coupled to the receiver (100), comprising means for receiving the selected indices of precoding matrices and a set of scalar coefficients, means for generating a refined precoding matrix based on the set of indices of precoding matrices and the one or more scalar coefficients at the transmitter side, and means for applying the refined precoding matrix to precode data signals to be transmitted between the transmitter and the receiver to reduce the quantization effect of precoding operations.

9.  The system of claim 8, wherein the codebook is predefined or configurable by the transmitter (200).

**Patentansprüche**

1.  Ein Verfahren zur drahtlosen Kommunikation in einem Mehrfacheingangs-Mehrfachausgangssystem, auch MIMO System (MIMO = multiple-input multiple-output), oder einem Mehrfacheingangs- Einfachausgangssystem, auch MISO System, (MISO = multiple-input single-output), welches folgendes aufweist:

    Erhalten von Downlinkkanalzustandsinformation auf einer Empfängerseite (S202);
    Auswählen eines Satzes von Indizes von Precoding-Matrizen oder eines Satzes von Precoding-Matritzen innerhalb des endlichen Kodebuchs, bzw. code book, entsprechend zu den erhaltenen Downlinkkanalzustandsinformationen auf der Empfängerseite (S204);
    Senden der ausgewählten Indizes von Precoding-Matrizen und einen oder mehrere Skalarkoeffizienten von dem Empfänger (100) zu einem Sender (200)(S206);
    Erzeugen einer verfeinerten Precoding-Matrix basierend auf dem Satz von Indizes von Precoding-Matrizen und den einen oder mehreren Skalarkoeffizienten auf der Senderseite (S208); und
    Anwenden der verfeinerten Precoding-Matrix um Datensignale zum Senden zwischen dem Sender (200) und dem Empfänger (100) vorzukodieren, um den Quantisierungseffekt von Precoding-Operationen (S210) zu reduzieren;

wobei das Verfahren durch Folgendes gekennzeichnet ist:

Bestimmen des einen oder der mehrerer Skalarkoeffizienten basierend auf dem Satz von Indizes von Precoding-Matrizen oder dem Satz von Precoding-Matrizen auf der Empfängerseite;
wobei der eine oder die mehreren Skalarkoeffizienten bestimmt werden durch Berechnung einer Projektion einer optimalen Precoding-Matrix in einem Unterraum, welcher von dem Satz von Indizes von Precoding-Matrizen oder dem Satz von Precoding-Matrizen aufgespannt wird.

2. Verfahren nach Anspruch 1, wobei die Projektion durch einen Abstand zwischen den Precoding-Matrizen repräsentiert wird.

3. Verfahren nach Anspruch 1, wobei das Kodebuch, bzw. code book, vordefiniert oder vom Sender konfigurierbar ist.

4. Verfahren nach Anspruch 1, wobei die Anzahl des Satzes von Indizes von Precoding-Matrizen oder des Satzes von Matrizenskalarkoeffizienten vordefiniert ist.

5. Ein Empfänger (100) gekoppelt mit einem Sender (200) über einen drahtlosen Kanal in einem drahtlosen Mehrfacheingangs- Mehrfachausgangskommunikationssystem, auch MIMO System (MIMO = multiple-input multiple-output), oder einem Mehrfacheingangs- Einfachausgangssystem, auch MISO System, (MISO = multiple-input single-output), der folgendes aufweist:

einen Decoder (130), konfiguriert zum Erhalten von Downlinkkanalzustandsinformation des drahtlosen Kanals, zum Auswählen eines Satzes von Indizes von Precoding-Matrizen oder eines Satzes von Precoding-Matrizen innerhalb eines endlichen Kodebuchs, auch code book, entsprechend der erhaltenen Downlinkkanalzustandsinformation, und zum Senden der ausgewählten Indizes von Precoding-Matrizen und einen oder mehreren Skalarkoeffizienten zu dem Sender über den drahtlosen Kanal, so dass der Sender (200) beim Empfangen der ausgewählten Indizes von Precoding-Matrizen und einem Satz von Skalarkoeffizienten eine verfeinerte Precoding-Matrix erzeugt, und zwar basierend auf dem Satz von Indizes von Precoding-Matrizen und dem einen oder mehreren Skalarkoeffizienten, und die verfeinerten Precoding-Matrix zum Senden zwischen dem Sender (200) und dem Empfänger (100) anwendet, **dadurch gekennzeichnet, dass** der eine oder die mehreren Skalarkoeffizienten in dem Empfänger basierend auf dem Satz von Indizes von Precoding-Matrizen oder dem Satz von Precoding-Matritzen bestimmt werden;
wobei der eine oder die mehreren Skalarkoeffizienten bestimmt werden durch Berechnen einer Projektion einer optimalen Precoding-Matrix in einen Unterraum, der von den Satz von Indizes von Precoding-Matrizen oder dem Satz von Precoding-Matrizen aufgespannt wird.

6. Empfänger nach Anspruch 5, wobei die Projektion von einer Distanz zwischen dem Satz von Precoding-Matrizen repräsentiert wird.

7. Empfänger nach Anspruch 5, wobei die Anzahl des Satzes von Indizes von Precoding-Matrizen oder des Satzes von Precoding-Matrizen und der Skalarkoeffizienten vordefiniert ist.

8. Ein Mehrfacheingangs- Mehrfachausgangssystem, auch MIMO System (M1-MO = multiple-input multiple-output), oder ein Mehrfacheingangs- Einfachausgangssystem, auch MISO System, (MISO = multiple-input single-output), welches folgendes aufweist:

einen Empfänger (100) gemäß einem der Ansprüche 5-7; und
einen Sender (200) gekoppelt mit dem Empfänger (100), der folgendes aufweist: Mittel zum Empfangen der ausgewählten Indizes von Precoding-Matrizen und einem Satz von Skalarkoeffizienten, Mittel zum Erzeugen einer verfeinerten Precoding-Matrix basierend auf dem Satz von Indizes von Precoding-Matrizen und den einen oder mehreren Skalarkoeffizienten auf der Senderseite, und Mittel zum Anwenden der verfeinerten Precoding-Matrix zum Vorkodieren von Datensignalen, welche zwischen dem Sender und dem Empfänger gesendet werden, um den Quantisierungseffekt von Precoding-Operationen zu reduzieren.

9. Das System nach Anspruch 8, wobei das Kodebuch, bzw. code book, vordefiniert oder vom Sender (200) konfigurierbar ist.

**Revendications**

1. Procédé pour des communications sans fil dans un système à entrées multiples et sorties multiples, MIMO, ou un système à entrées multiples et sortie unique, MISO, comprenant les étapes suivantes :

   obtenir des informations d'état de canal de liaison descendante au niveau d'un côté récepteur (S202) ;
   sélectionner un ensemble d'indices de matrices de pré-codage ou un ensemble de matrices de pré-codage dans le livre de code fini conformément aux informations d'état de canal de liaison descendante obtenues au niveau du côté récepteur (S204) ;
   transmettre les indices sélectionnés de matrices de pré-codage et un ou plusieurs coefficients scalaires à partir du récepteur (100) vers un émetteur (200) (S206) ;
   générer une matrice de pré-codage affinée sur la base de l'ensemble d'indices de matrices de pré-codage et desdits un ou plusieurs coefficients scalaires au niveau du côté émetteur (S208) ; et
   appliquer la matrice de pré-codage affinée au pré-codage de signaux de données à transmettre entre l'émetteur (200) et le récepteur (100) pour réduire les effets de quantification d'opérations de pré-codage (S210), **caractérisé par** l'étape suivante :

      déterminer lesdits un ou plusieurs coefficients scalaires sur la base de l'ensemble d'indices de matrices de pré-codage ou de l'ensemble de matrices de pré-codage au niveau du côté récepteur ;
      dans lequel lesdits un ou plusieurs coefficients scalaires sont déterminés en calculant une projection d'une matrice de pré-codage optimale sur un sous-espace couvert par l'ensemble d'indices de matrices de pré-codage ou l'ensemble de matrices de pré-codage.

2. Procédé selon la revendication 1, dans lequel la projection est représentée par une distance entre les matrices de pré-codage.

3. Procédé selon la revendication 1, dans lequel le livre de code est prédéfini ou configurable par l'émetteur.

4. Procédé selon la revendication 1, dans lequel le nombre de l'ensemble d'indices de matrices de pré-codage ou de l'ensemble de coefficients scalaires de matrices de pré-codage est prédéfini.

5. Récepteur (100) couplé à un émetteur (200) par l'intermédiaire d'un canal sans fil dans un système de communication sans fil à entrées multiples et sorties multiples, MIMO, ou à entrées multiples et sortie unique, MISO, comprenant :

   un décodeur (130), agencé pour obtenir des informations d'état de canal de liaison descendante du canal sans fil, pour sélectionner un ensemble d'indices de matrices de pré-codage ou un ensemble de matrices de pré-codage dans un livre de code fini conformément aux informations d'état de canal de liaison descendante obtenues, et pour transmettre les indices sélectionnés de matrices de pré-codage et lesdits un ou plusieurs coefficients scalaires à l'émetteur par l'intermédiaire du canal sans fil de sorte que l'émetteur (200), à la réception des indices sélectionnés de matrices de pré-codage et d'un ensemble de coefficients scalaires, génère une matrice de pré-codage affinée sur la base de l'ensemble d'indices de matrices de pré-codage et desdits un ou plusieurs coefficients scalaires, et applique la matrice de pré-codage affinée pour une transmission entre l'émetteur (200) et le récepteur (100),
   **caractérisé en ce que** lesdits un ou plusieurs coefficients scalaires sont déterminés au niveau du récepteur sur la base de l'ensemble d'indices de matrices de pré-codage ou de l'ensemble de matrices de pré-codage ;
   dans lequel lesdits un ou plusieurs coefficients scalaires sont déterminés en calculant une projection d'une matrice de pré-codage optimale sur un sous-espace couvert par l'ensemble d'indices de matrices de pré-codage ou l'ensemble de matrices de pré-codage.

6. Récepteur selon la revendication 5, dans lequel la projection est représentée par une distance entre l'ensemble de matrices de pré-codage.

7. Récepteur selon la revendication 5, dans lequel le nombre de l'ensemble d'indices de matrices de pré-codage ou de l'ensemble de coefficients scalaires de matrices de pré-codage est prédéfini.

8. Système à entrées multiples et sorties multiples, MIMO, ou à entrées multiples et sortie unique, MISO, comprenant :

   un récepteur (100) selon l'une quelconque des revendications 5 à 7 ; et

un émetteur (200) couplé au récepteur (100), comprenant des moyens pour recevoir les indices sélectionnés de matrices de pré-codage et un ensemble de coefficients scalaires, des moyens pour générer une matrice de pré-codage affinée sur la base de l'ensemble d'indices de matrices de pré-codage et desdits un ou plusieurs coefficients scalaires au niveau du côté émetteur, et des moyens pour appliquer la matrice de pré-codage affinée pour pré-coder des signaux de données à transmettre entre l'émetteur et le récepteur pour réduire l'effet de quantification d'opérations de pré-codage.

9. Système selon la revendication 8, dans lequel le livre de code est prédéfini ou configurable par l'émetteur (200).

FIG. 1

EP 2 357 768 B1

Start

Obtain downlink channel state information
(CSI) of the wireless channel at a receiver side — S202

Select a set of indices of precoding matrices
within the finite codebook according to the
obtained downlink channel state information — S204
and determine one or more scalar coefficient at
the receiver side

Transmit the selected indices of precoding
matrices and the determined scalar — S206
coefficient(s) from the receiver to a transmitter

Generate a refined precoding matrix that is to
be combined with a data signal which is at least
based on the set of indices of precoding — S208
matrices and the at least one scalar
coefficient(s) at the transmitter side

Apply the refined precoding matrix to data
signal to be transmitted between the receiver — S210
and the transmitter

End

FIG. 2

$$F_{OPT}$$

$$F_1$$

$$F'=a_0 F_1+(1-a_0)F_2$$

$$F_2$$

FIG. 3

**EP 2 357 768 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010125237 A1
- US 20080212461 A1